# EUROPÄISCHE PATENTSCHRIFT

(11) **EP 2 390 788 B1**
(45) Veröffentlichungstag und Bekanntmachung des Hinweises auf die Patenterteilung: **10.06.2015**
(21) Anmeldenummer: 11162999.4
(22) Anmeldetag: 19.04.2011
(51) Int. Cl.: G06F 9/54, G06F 21/62

(54) **Kommunikationssystem zur mobilen Kommunikation**
Communication system for mobile communication
Système de communication pour la communication mobile

(30) Priorität: 26.05.2010 DE 102010021619
(43) Veröffentlichungstag der Anmeldung: 30.11.2011
(73) Patentinhaber: Rohde & Schwarz GmbH & Co. KG, 81671 München (DE)
(72) Erfinder: Kostov, Ivan, 80355, München (DE); Woitschach, Peter, 83229, Aschau (DE)
(74) Vertreter: Körfer, Thomas

(56) Entgegenhaltungen:
- US-A1- 2008 184 038
- US-A1- 2009 023 414
- US-A1- 2010 056 200

## Beschreibung

Die vorliegende Erfindung bezieht sich auf die Realisierung von Kommunikationssystemen, insbesondere von Funksystemen, die Daten über eine Luftschnittstelle übertragen sollen.

Die vielen derzeit vorhandenen und sich laufend weiterentwickelnden Kommunikationsstandards und Kommunikationsprotokolle lassen sich nur noch schwer ausschließlich in Hardware realisieren. Schon seit längerem werden daher mehr und mehr Komponenten eines Kommunikationssystems, welche früher durch diskrete Bauteile repräsentiert wurden, durch Software-Module ersetzt. Eine vollständig digitale Basisbandgenerierung ist ein Schritt, um mit einer möglichst geringen Anzahl an Bauteilen möglichst viele Kommunikationsstandards abzudecken. Immer schneller werdende Digital/Analog-Umsetzer und digitale Signalprozessoren führen dazu, dass auch die Mischung in das Übertragungsband künftig über Software-Module erfolgen kann.

Das SDR-Projekt (engl. software defined radio; dt. softwaredefinierter Funk) beschreibt das Bestreben, möglichst die gesamte Signalverarbeitung eines Hochfrequenz-Senders oder -Empfängers mit Hilfe angepasster Hardware (z.B. digitale Signalprozessoren, programmierbare Logikbausteine) in Software nachzubilden. Das Einsatzgebiet ist sehr breit gestreut und reicht von Mobiltelefonen bis hin zu Funkgeräten. Damit möglichst einheitliche Schnittstellen existieren, wurden diese in der SCA-Architektur (engl. software communication architecture; dt. Software Kommunikationsarchitektur) genormt.

Diese erlaubt verschiedenen Herstellern, das Entwickeln von Kommunikationsprotokollen, die anschließend auf Kommunikationsgeräten sämtlicher Hersteller die den SCA-Standard einhalten, lauffähig sind. Dabei können verschiedene Kommunikationsstandards und Kommunikationsprotokolle in Echtzeit nachgeladen oder ausgetauscht werden. Zu beachten ist allerdings, dass sichergestellt sein muss, dass sich die verschiedenen Kommunikationsprotokolle gegenseitig nicht beeinflussen.

Aus der US 2009/0023414 A1 sind ein System und ein Verfahren bekannt, die es erlauben, verschiedene SDR-Module auf verschiedenen Prozessoren und in verschiedenen Speicherbereichen auszuführen, die für das Betriebssystem gleichzeitig unsichtbar sind. Dadurch soll sichergestellt sein, dass die einzelnen SDR-Module, in denen die gesamte Signalverarbeitung erfolgt, auf die ihnen zugewiesenen Ressourcen exklusiv zugreifen können, um dadurch die notwendige Dienstgüte zu erreichen. Durch Verändern der Speichertabelle (engl. physical memory map) und der ACPI-Schnittstelle (engl. advanced configuration and power interface; dt. erweiterte Konfigurations- und Energieschnittstelle) vor dem Start des Betriebssystems, werden die für die SDR-Module genutzten Speicherbereiche und Prozessoren für das Betriebssystem ausgeblendet. Die Kommunikation einzelner SDR-Module, die in getrennten Partitionen (Speicherbereiche) untergebracht sind, erfolgt über eine IPB-Schnittstelle (engl. inter-partition bridge; dt. Inter-Partitionsbrücke).

Nachteilig an der US 2009/0023414 A1 ist, dass eine Kommunikation innerhalb der SDR-Module nicht reglementiert ist. Dies ist aber gerade bei sicherheitskritischen Kommunikationssystemen, die z.B. in Flugzeugen eingesetzt werden und von denen die Sicherheit der Passagiere abhängt, unabdingbar.

In der US 2008/0184038 A1 ist ein Verfahren zum Überprüfen von Software in einem SDR-Gerät beschrieben, wobei vor dem Betreiben des SDR-Geräts die in verschlüsselter Form abgelegte Software geladen und validiert werden muss. Eine Wellenformapplikation wird instanziiert, nachdem das Betriebssystem des SDR-Geräts geladen ist. Dabei kann die entschlüsselte Wellenformapplikation von einem Kanal-Prozessor zu einem Kernprozessor kommuniziert werden.

In der US 2010/0056200 A1 wird ein SDR-System vorgeschlagen, bei dem zeitkritische Informationen zwischen den einzelnen SDR-Modulen ausgetauscht werden können. Ein Verbindungsverwalter, engl. connection manager, erhält Daten einer Multifunk-Zugriffsschnittstelle, beinhaltend Steuerinformationen. Der Verbindungsverwalter entscheidet auf Basis der Steuerinformation, welche SDR-Ressource zur Verfügung steht und den Nachrichtenstrom empfangen kann, wobei das SDR-Modul auch bezüglich des Nachrichtenstroms konfiguriert werden kann.

Es ist die Aufgabe der Erfindung ein Kommunikationssystem und ein Verfahren für ein Kommunikationssystem zu schaffen, durch die ein Datenaustausch innerhalb der einzelnen SDR-Module nur in streng reglementierten Bereichen möglich ist.

Die Aufgabe wird bezüglich des Kommunikationssystems durch die Merkmale des Anspruchs 1 und bezüglich des Verfahrens durch die Merkmale des Anspruchs 18 gelöst. In den Unteransprüchen sind vorteilhafte Weiterbildungen des erfindungsgemäßen Kommunikationssystems und des erfindungsgemäßen Verfahrens für ein Kommunikationssystem angegeben.

Das erfindungsgemäße Kommunikationssystem zur mobilen Kommunikation weist eine zentrale Verarbeitungseinheit, eine Prozess- und Datenverarbeitungseinheit, zumindest eine Steuerdatenverarbeitungseinheit und zumindest eine Nutzdatenverarbeitungseinheit auf. Die Prozess- und Datenverarbeitungseinheit ist einerseits mit der zentralen Verarbeitungseinheit und andererseits mit der zumindest einen Steuerdatenverarbeitungseinheit und mit der zumindest einen Nutzdatenverarbeitungseinheit verbunden und steuert diese. Die zumindest eine Steuerdatenverarbeitungseinheit und die zumindest eine Nutzdatenverarbeitungseinheit sind miteinander über eine Verbindung verbunden, über die ein Austausch von einer limitierten Anzahl an Daten stattfindet.

Besonders vorteilhaft ist es, wenn die Steuerdatenverarbeitungseinheit (engl. control processing unit) und die Nutzdatenverarbeitungseinheit (engl. payload processing unit) getrennt voneinander sind und dass nur eine limitierte Anzahl an Daten zwischen der Steuerdatenverarbeitungseinheit und der Nutzdatenverarbeitungseinheit über eine definierte Verbindung ausgetauscht werden können. Gerade bei sicherheitskritischen Anwendungen, wie z.B. in der Luftfahrt, ist eine Trennung von Steuerbefehlen, wie sie in der Steuerdatenverarbeitungseinheit verarbeitet werden, von den Nutzdaten, wie sie in der Nutzdatenverarbeitungseinheit verarbeitet werden, vorteilhaft, um die notwendigen Zertifizierungen, die für den Verkauf und den Betrieb eines solchen Kommunikationssystems notwendig sind, zu erlangen.

Das erfindungsgemäße Verfahren für ein Kommunikationssystem zur mobilen Kommunikation weist eine zentrale Verarbeitungseinheit, eine Prozess- und Datenverarbeitungseinheit, zumindest eine Steuerdatenverarbeitungseinheit und zumindest eine Nutzdatenverarbeitungseinheit auf. In einem ersten Schritt wird die Prozess- und Datenverarbeitungseinheit mit der zentralen Verarbeitungseinheit, mit der zumindest einen Steuerdatenverarbeitungseinheit und mit der zumindest einen Nutzdatenverarbeitungseinheit verbunden. Dabei werden die zentrale Verarbeitungseinheit, die zumindest eine Steuerdatenverarbeitungseinheit und die zumindest eine Nutzdatenverarbeitungseinheit von der Prozess- und Datenverarbeitungseinheit gesteuert. In einem zweiten Schritt werden die zumindest eine Steuerdatenverarbeitungseinheit mit der zumindest einen Nutzdatenverarbeitungseinheit durch eine Verbindung verbunden. In einem weiteren Schritt findet ein Austausch einer limitierten Anzahl von Daten durch diese Verbindung statt.

Besonders vorteilhaft ist es, wenn die Steuerdatenverarbeitungseinheit und die Nutzdatenverarbeitungseinheit getrennt voneinander sind und wenn nur eine limitierte Anzahl an Daten zwischen der Steuerdatenverarbeitungseinheit und der Nutzdatenverarbeitungseinheit über eine definierte Verbindung ausgetauscht werden können. Dies ist vorteilhaft, um die notwendige Zertifizierung für sicherheitskritische Bereiche, wie etwa für den Flugverkehr, zu erhalten.

Ein weiterer Vorteil des erfindungsgemäßen Kommunikationssystems besteht, wenn es sich bei der limitierten Anzahl an Daten um eine Anzahl handelt, die im fehlerfreien Betriebsablauf für gewöhnlich zu übertragen ist. Weil die Realisierung des Kommunikationssystems den Richtlinien der SCA-Architektur entspricht, ist die Struktur in welcher die Daten zwischen der zumindest einen Steuerdatenverarbeitungseinheit und der zumindest einen Nutzdatenverarbeitungseinheit übertragen werden können, bekannt, so dass die erlaubte Anzahl an zu übertragenden Daten auf die Anzahl der für gewöhnlich zu übertragenden Daten limitiert werden kann. Fehler in der Nutzdatenverarbeitungseinheit führen daher nicht dazu, dass eine unbeschränkte Anzahl an Nutzdaten von der Nutzdatenverarbeitungseinheit an die Steuerdatenverarbeitungseinheit übertragen werden können.

Ein zusätzlicher Vorteil des erfindungsgemäßen Kommunikationssystems besteht, wenn der Austausch der Daten über eine Signatur oder eine Prüfsumme gesichert ist. Dies führt dazu, dass nur validierte Daten letztlich weiterverarbeitet werden. Kompromittierungsversuche oder Fehler in der Implementierung können so auf einfache Weise entdeckt werden, wobei die zu übertragenden Daten verworfen werden.

Außerdem ist ein weiterer Vorteil des erfindungsgemäßen Kommunikationssystems gegeben, wenn bei Auftreten eines Fehlers die zumindest eine Steuerdatenverarbeitungseinheit und/oder die zumindest eine Nutzdatenverarbeitungseinheit neu zu Starten und/oder zu Laden ist, bzw. sind. Sollte eine dieser beiden Verarbeitungseinheiten, z.B. durch Kompromittierung, fehlerhaft arbeiten, so kann diese Verarbeitungseinheit neu aus dem Speicher geladen und gestartet werden, wodurch der Urzustand wieder hergestellt ist.

Schlussendlich besteht ein weiterer Vorteil des erfindungsgemäßen Verfahrens, wenn die Daten zwischen der zumindest einen Steuerdatenverarbeitungseinheit und der zumindest einen Nutzdatenverarbeitungseinheit synchronisiert werden, sobald die Nutzdatenverarbeitungseinheit neu gestartet und/oder neu geladen wird. Dies stellt das Zusammenarbeiten der beiden Verarbeitungseinheiten sicher.

Verschiedene Ausführungsbeispiele der Erfindung werden nachfolgend unter Bezugnahme auf die Zeichnung beispielhaft beschrieben. Gleiche Gegenstände weisen dieselben Bezugszeichen auf. Die entsprechenden Figuren der Zeichnung zeigen im Einzelnen:
- Fig. 1: eine Übersicht über ein Ausführungsbeispiel des erfindungsgemäßen Kommunikationssystems;
- Fig. 2: den beispielhaften Aufbau eines Datenpakets, wie es zwischen der Steuerdatenverarbeitungseinheit und der Nutzdatenverarbeitungseinheit des erfindungsgemäßen Kommunikationssystems ausgetauscht wird;
- Fig. 3: eine Übersicht über den beispielhaften Aufbau der Steuerdatenverarbeitungseinheit und der Nutzdatenverarbeitungseinheit des erfindungsgemäßen Kommunikationssystems; und
- Fig. 4: ein beispielhaftes Ablaufdiagramm, welches das erfindungsgemäße Verfahren für das Kommunikationssystem beschreibt.

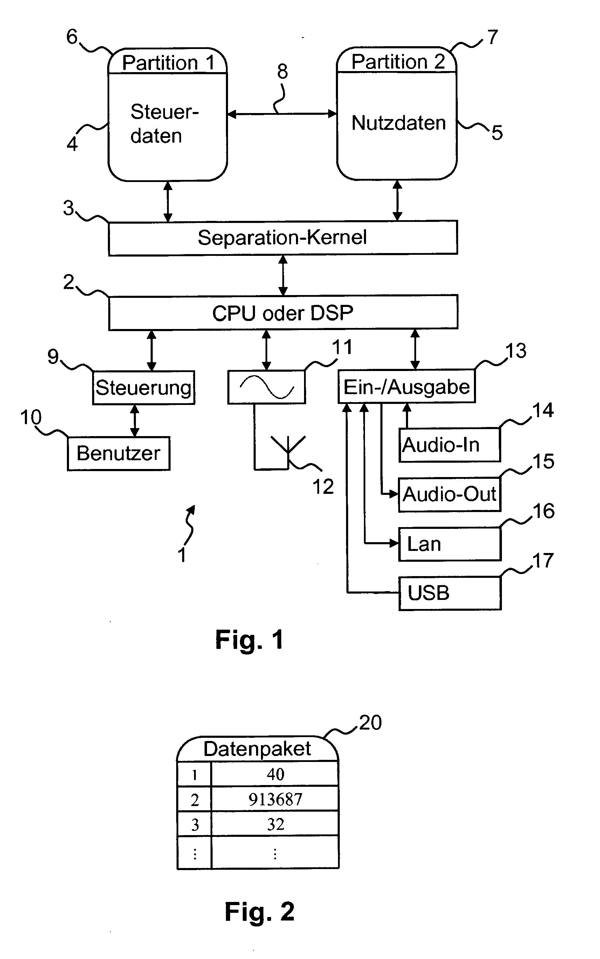

Fig. 1 zeigt eine Übersicht über das Ausführungsbeispiel des erfindungsgemäßen Kommunikationssystems 1. Bei dem Kommunikationssystem 1 handelt es sich insbesondere um ein Funkgerät. Das Kommunikationssystem 1 zur mobilen Kommunikation weist eine zentrale Verarbeitungseinheit 2 auf. Bei dieser zentralen Verarbeitungseinheit 2 handelt es sich um eine CPU (engl. central processing unit; dt. zentrale Verarbeitungseinheit) oder um einen digitalen Signalprozessor. Weiterhin umfasst das Kommunikationssystem 1 eine Prozess- und Datenverarbeitungseinheit 3. Bei der Prozess- und Datenverarbeitungseinheit 3 handelt es sich um das Betriebssystem des Kommunikationsgeräts 1. Sicherheitskritische Anwendungen erfordern hier ein Separation-Kernel-Betriebssystem 3. Derartige Betriebssysteme trennen das Programm des Kommunikationssystems 1 in einzelne Funktionsblöcke, die als eigenständige Prozessräume ausführungstechnisch und zeitlich strikt voneinander getrennt werden. Die verschiedenen Funktionsblöcke werden in verschiedenen Speicherbereichen (engl. partitions; dt. Partitionen) gespeichert. Zwischen diesen Partitionen werden vom Separation-Kernel-Betriebssystem 3 hohe Hürden gesetzt, die nur in strikt kontrollierter Weise mit vordefinierten Kommunikationskanälen überwunden werden können. Die Partition-Anordnung wird für das Kommunikationssystem 1 zur Entwicklungszeit fest definiert und ist aus Sicherheitsgründen zur Boot- bzw. Laufzeit unabänderlich und damit statisch.

Weiterhin weist das Kommunikationssystem 1 zumindest eine Steuerdatenverarbeitungseinheit 4 und zumindest eine Nutzdatenverarbeitungseinheit 5 auf. Beide Verarbeitungseinheiten 4, 5 realisieren gemeinsam ein Kommunikationsprotokoll, welches auch als Wellenform (engl. waveform) bezeichnet wird. Eine solche Wellenform beinhaltet alle Überführungen, bzw. Transformationen die auf eine zu versendende Information angewandt werden, bis diese schließlich durch einen Digital-/Analog-Wandler in ein analoges Signal umgesetzt wird. Selbiges gilt auch in umgekehrter Richtung für den Fall, dass eine Information empfangen wird.

Die Wellenform lässt sich in Steuerdaten und in Nutzdaten unterteilen, wobei die Steuerdaten in der zumindest einen Steuerdatenverarbeitungseinheit 4 und die Nutzdaten in der zumindest einen Nutzdatenverarbeitungseinheit 5 verarbeitet werden. Eine maximale Datensicherheit kann erreicht werden, indem die Nutzdatenverarbeitungseinheit 5 (engl. payload processing unit) der Wellenform des Kommunikationssystem 1 von der Steuerdatenverarbeitungseinheit 4 (engl. control processing unit), die der Organisation und Steuerung der Wellenform dienen, getrennt werden. Aus diesem Grund sind die zumindest eine Steuerdatenverarbeitungseinheit 4 und die zumindest eine Nutzdatenverarbeitungseinheit 5 in voneinander getrennten Speicherbereichen (Partitionen) untergebracht. Die Steuerdatenverarbeitungseinheit 4 ist in einer ersten Partition 6 und die Nutzdatenverarbeitungseinheit 5 in einer zweiten Partition 7 untergebracht.

Weiterhin ist die Prozess- und Datenverarbeitungseinheit 3 mit der zentralen Datenverarbeitungseinheit 2, der zumindest einen Steuerdatenverarbeitungseinheit 4 und der zumindest einen Nutzdatenverarbeitungseinheit 5 verbunden und steuert diese. Außerdem sind die zumindest eine Steuerdatenverarbeitungseinheit 4 und die zumindest eine Nutzdatenverarbeitungseinheit 5 miteinander über eine Verbindung 8 verbunden, über die eine limitierte Anzahl an Daten 20 ausgetauscht wird.

Die zentrale Datenverarbeitungseinheit 2 des Kommunikationssystems 1 ist außerdem mit einer Steuereinheit 9 verbunden. Diese Steuereinheit 9 interagiert mit einem Benutzer 10. Der Benutzer 10 kann an der Steuereinheit 9 z.B. die Verschlüsselung und/oder die Bitrate und/oder die Modulationsart und/oder die Frequenz und/oder die Bandbreite und/oder die Sendeleistung des Kommunikationssystems 1 einstellen. Ergänzende, oben nicht aufgeführte Einstellungen, sind ebenfalls möglich. Dem Benutzer 10 werden die aktuelle Konfiguration und/oder die getätigten Einstellungen an einer in Fig. 1 nicht dargestellten Bildschirmeinheit angezeigt. Die zentrale Datenverarbeitungseinheit 2 ist ferner mit einer Sende- und Empfangseinrichtung 11 verbunden. Die Sende- und Empfangseinrichtung 11 ist selbst mit zumindest einer Antenne 12 verbunden. In der Sende- und Empfangseinrichtung wird das Basisbandsignal, welches innerhalb der zentralen Datenverarbeitungseinheit 2 generiert wurde, in ein analoges Signal umgesetzt und in das Übertragungsband gemischt. In Empfangsrichtung verhält es sich genau umgekehrt. Das empfangene Signal wird in der Sende- und Empfangseinrichtung 11 in das Basisband herunter gemischt und anschließend digitalisiert und an die zentrale Datenverarbeitungseinheit 2 übergeben.

Die zentrale Datenverarbeitungseinheit 2 ist weiterhin mit einer Ein- und Ausgabeeinheit 13 verbunden. Die Ein- und Ausgabeeinheit 13 weist dabei einen Audio-Eingang 14 und/oder einen Audio-Ausgang 15 und/oder einen Netzwerkanschluss 16 und/oder einen USB-Anschluss 17 (engl. universal serial bus; dt. universeller serieller Bus) auf. Ein weiterer Benutzer, kann an den Audio-Eingang 14 z.B. ein Mikrophon und an den Audio-Ausgang 15 z.B. einen Kopfhörer anschließen. Nachdem ein erster Benutzer 10 das Kommunikationssystem 1 eingestellt hat, kann der weitere Benutzer mit einem entfernten Benutzer in Kontakt treten.

Neben Sprachdaten können über das Kommunikationssystem 1 auch Computersysteme miteinander verbunden werden. Hierzu steht eine Lan-Schnittstelle (engl. local area network; dt. lokales Netzwerk) bereit. Über die USB-Schnittstelle ist es dem weiteren Benutzer möglich, zusätzliche Kommunikationsprotokolle (Wellenformen) in das Kommunikationssystem 1 einzubinden. Die zentrale Datenverarbeitungseinheit 2 lädt diese zusätzlichen Kommunikationsprotokolle aus der mit dem USB-Anschluss 17 verbundenen Speichereinheit und kopiert diese in die vorhandenen Partitionen 6 und 7.

Fig. 2 zeigt den Aufbau bzw. die Struktur eines Datenpakets 20, wie es zwischen der Steuerdatenverarbeitungseinheit 4 und der Nutzdatenverarbeitungseinheit 5 des erfindungsgemäßen Kommunikationssystems 1 ausgetauscht wird. Anstatt von einem Datenpaket 20 kann auch von einer Nachricht 20 (engl. message), oder einfach von Daten 20 gesprochen werden, die zwischen den einzelnen Funktionsblöcken ausgetauscht wird. Das Datenpaket 20 ist entsprechend einem zweidimensionalen Array aufgebaut. Bei den auszutauschenden Daten bzw. dem Datenpacket 20 handelt es sich um die SCA-Eigenschaftsparameter (engl. SCA-Property) des Kommunikationssystems 1.

In einer ersten Spalte sind die Identifikationsnummern der SCA-Eigenschaftsparameter aufgelistet. Alle Identifikationsnummern sind einzigartig. Jede Identifikationsnummer korrespondiert mit einem SCA-Eigenschaftsparameter. In der zweiten Spalte wird der Wert für den SCA-Eigenschaftsparameter übertragen. Beispielsweise kann der SCA-Eigenschaftsparameter mit der Identifikationsnummer "1" mit der Variablen "Abtastrate" korrespondieren, so dass die Abtastrate für den Audio-Eingang gemäß Fig. 2 40 kBit entspricht. Ein Datenpacket 20 besteht dabei einzig aus Ziffern, die auch als Strings kodiert sein können. Buchstaben kommen in dem Datenpacket 20 nicht vor. Die Größe für die Variablenwerte der SCA-Eigenschaftsparameter liegt im normalen Betriebsablauf bei deutlich unter z.B. 20 Byte, wobei die Größe für die Variablenwerte in der SCA-Architektur nicht limitiert ist.

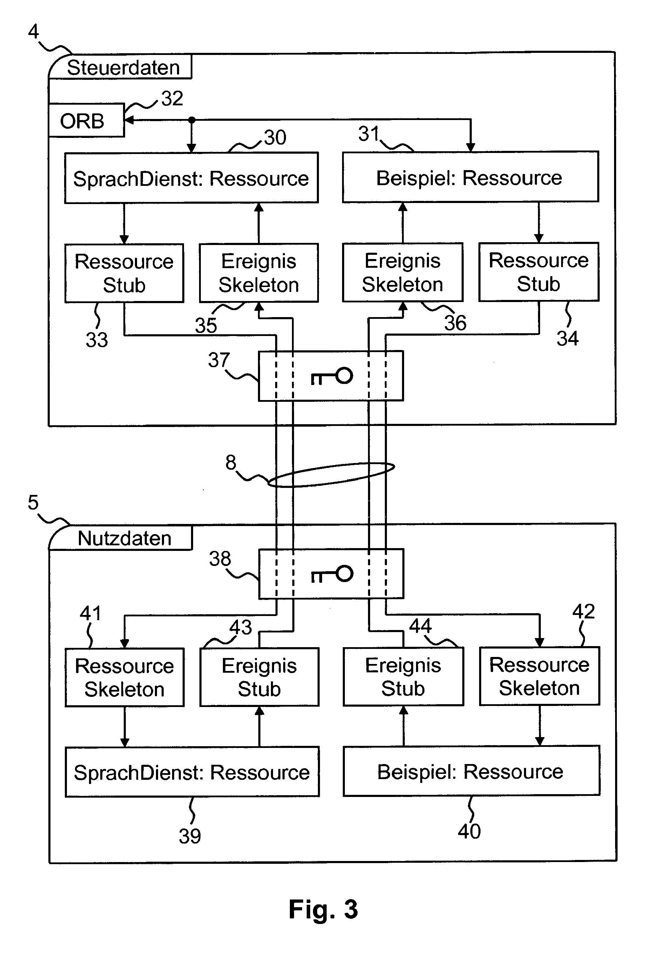

Ein Merkmal der Erfindung liegt darin, dass für jeden SCA-Eigenschaftsparameter nur eine limitierte Anzahl an Daten 20 übertragen wird und dass es sich bei der limitierten Anzahl an Daten 20 um eine Anzahl handelt, die im fehlerfreien Betriebsablauf für gewöhnlich zu übertragen ist. Liegt der Variablenwert für einen SCA-Eigenschaftsparameter über z.B. 20 Byte, so wird dieser auf z.B. genau 20 Byte beschränkt, bevor mit der Übertragung des nächsten SCA-Eigenschaftsparameters begonnen wird. Zu Beginn werden in solch einem Datenpacket 20 die Einstellungen des Kommunikationssystems von der Steuerdatenverarbeitungseinheit 4 zu der Nutzdatenverarbeitungseinheit 5 übertragen. Die genaue Funktionsweise wird in Fig. 3 erläutert.

Fig. 3 zeigt eine Übersicht über die Steuerdatenverarbeitungseinheit 4 und die Nutzdatenverarbeitungseinheit 5 des erfindungsgemäßen Kommunikationssystems 1. Die Steuerdatenverarbeitungseinheit 4 ist in einer ersten Partition 6 und die Nutzdatenverarbeitungseinheit 5 ist in einer zweiten Partition 7 eingebettet. Die Steuerdatenverarbeitungseinheit 4 verfügt über verschiedene SCA-Ressourcen 30, 31. Innerhalb dieser SCA-Ressourcen 30, 31, die den Kern der Steuerdatenverarbeitungseinheit 4 darstellen, sind die SCA-Eigenschaftsparameter abgelegt, die genau angeben, wie die zu versendenden Informationen aufzubereiten sind. In dem erfindungsgemäßen Ausführungsbeispiel aus Fig. 3 gibt es eine SCA-Ressource 30, die SCA-Eigenschaftsparameter für die Aufbereitung der Sprachdaten beinhaltet, und eine Beispiel-SCA-Ressource 31, die SCA-Eigenschaftsparameter für die Aufbereitung der Daten beinhaltet, die ein Computersystem, welches mit dem Netzwerkanschluss 16 verbunden ist, an ein anderes Computersystem versendet.

Einstellungen, die der Benutzer 10 vornimmt, werden von der Steuerung 9 an die zentrale Verarbeitungseinheit 2 übermittelt und durch die Prozess- und Datenverarbeitungseinheit 3 (Separation-Kernel-Betriebssystem) z.B. in der SCA-Ressource 30 gespeichert. Hierfür nutzt die Prozess- und Datenverarbeitungseinheit 3 die Schnittstelle 32. Über diese Schnittstelle 32 (engl. object request broker; dt. Objektanfragevermittler) können die Inhalte der SCA-Ressource 30 oder 31 abgefragt und/oder verändert werden.

Weiterhin weist die Steuerdatenverarbeitungseinheit 4 verschiedene Schnittstellen auf, die zur Kommunikation mit der Nutzdatenverarbeitungseinheit 5 dienen. Die Schnittstellen untergliedern sich in Schnittstellen, die der lokalen SCA-Ressource 30, 31 innerhalb der Steuerdatenverarbeitungseinheit 4 Zugriff auf eine entfernte SCA-Ressource 39, 40 innerhalb der Nutzdatenverarbeitungseinheit 5 liefern und in Schnittstellen die der entfernten SCA-Ressource 39, 40 innerhalb der Nutzdatenverarbeitungseinheit 5 Zugriff auf die lokale SCA-Ressource 30, 31 innerhalb der Steuerdatenverarbeitungseinheit 4 erlauben. Die Schnittstellen 35, 36 erlauben der entfernten SCA-Ressource 39, 40 den Zugriff auf die lokale SCA-Ressource 30, 31 und die Schnittstellen 33, 34 dienen der lokalen SCA-Ressource 30,31 dazu, auf die entfernte SCA-Ressource 39, 40 zugreifen zu können. Bei den Schnittstellen 33, 34 wird auch von Stub-Schnittstellen 33, 34 (dt. Stümmel-Schnittstellen) und bei den Schnittstellen 35, 36 auch von Skeleton-Schnittstellen 35, 36 (dt. Gerüst-Schnittstellen) gesprochen.

Sowohl die zumindest eine Steuerdatenverarbeitungseinheit 4 als auch die zumindest eine Nutzdatenverarbeitungseinheit 5 verfügen über je eine Prüfeinheit 37, 38. Die Schnittstellen 33, 34, 35, 36 der Steuerdatenverarbeitungseinheit 4 sind dabei mit der Prüfeinheit 37 verbunden. Durch die Prüfeinheiten 37, 38 ist der Austausch der Daten 20, bzw. Datenpakete 20 über eine Signatur oder eine Prüfsumme gesichert. Prüfsummen dienen dazu, dass Übertragungsfehler zwischen der Steuerdatenverarbeitungseinheit 4 und der Nutzdatenverarbeitungseinheit 5 oder Fehler, die innerhalb einer der Verarbeitungseinheiten 4, 5 entstehen, entdeckt werden können. Signaturen dienen dazu, um herauszufinden, ob die Daten 20, bzw. Datenpakete 20 aktiv von einem Dritten kompromittiert wurden.

Über die Verbindung 8 ist die Prüfeinheit 37 der Steuerdatenverarbeitungseinheit 4 und damit die Steuerdatenverarbeitungseinheit 4 mit der Prüfeinheit 38 der Nutzdatenverarbeitungseinheit 5 und damit mit der Nutzdatenverarbeitungseinheit 5 verbunden.

Die Nutzdatenverarbeitungseinheit 5 weist ebenfalls verschiedene SCA-Ressourcen 39, 40 auf. Die SCA-Ressource 39 beinhaltet z.B. die Sprachdaten, die von einem weiteren Benutzer z.B. über ein Mikrophon am Audio-Eingang 14 eingespeist werden, oder die Sprachdaten, die von einem entfernten Benutzer stammen und durch die Antenne 12 des Kommunikationssystems 1 empfangen wurden. Außerdem ist eine Beispiel-SCA-Ressource 40 dargestellt, die z.B. die Daten beinhaltet, die ein Computersystem, welches mit dem Netzwerkanschluss 16 verbunden ist, an ein anderes Computersystem versendet oder die Daten beinhaltet, die von einem entfernten Computersystem über die Antenne 12 des Kommunikationssystems 1 empfangen werden. Die SCA-Ressourcen 39, 40 beinhalten außerdem die Werkzeuge die notwendig sind, um z.B. die Sprachdaten derart aufzubereiten, dass diese anschließend nur noch einem A/D-Wandler zugeführt werden müssen.

Weiterhin weist die Nutzdatenverarbeitungseinheit 5 verschiedene Schnittstellen auf, die zur Kommunikation mit der Steuerdatenverarbeitungseinheit 4 dienen. Die Schnittstellen untergliedern sich in Schnittstellen, die der lokalen SCA-Ressource 39, 40 innerhalb der Nutzdatenverarbeitungseinheit 5 Zugriff auf eine entfernte SCA-Ressource 30, 31 innerhalb der Steuerdatenverarbeitungseinheit 4 liefern und in Schnittstellen die der entfernten SCA-Ressource 30, 31 innerhalb der Steuerdatenverarbeitungseinheit 4 Zugriff auf die lokale SCA-Ressource 39, 40 innerhalb der Nutzdatenverarbeitungseinheit 5 erlauben. Die Schnittstellen 41, 42 erlauben der entfernten SCA-Ressource 30, 31 den Zugriff auf die lokale SCA-Ressource 39, 40 und die Schnittstellen 43, 44 dienen der lokalen SCA-Ressource 39, 40 dazu, auf die entfernte SCA-Ressource 30, 31 zugreifen zu können. Bei den Schnittstellen 43, 44 wird auch von Stub-Schnittstellen 43, 44 (dt. Stümmel-Schnittstellen) und bei den Schnittstellen 41, 42 auch von Skeleton-Schnittstellen 41, 42 (dt. Gerüst-Schnittstellen) gesprochen.

Die Funktionsweise wird anhand von zu sendenden Sprachdaten näher erläutert. Die zu sendenden Sprachdaten befinden sich in der Nutzdatenverarbeitungseinheit 5 (engl. payload-processing-unit). Der Benutzer 10 hat bereits die notwendigen Einstellungen, z.B. Funkkanal, Verschlüsselung und/oder die Abtastrate eingestellt. Diese Einstellungen sind als SCA-Eigenschaftsparameter in der SCA-Ressource 30 innerhalb der Steuerdatenverarbeitungseinheit 4 gespeichert. Die SCA-Ressource 30 überträgt diese SCA-Eigenschaftsparameter als Daten 20 bzw. Datenpakete 20 anschließend über die Schnittstellen 33 und 41 sowie über die Prüfeinheiten 37 und 38 an die SCA-Ressource 39, die sich in der Nutzdatenverarbeitungseinheit 5 befindet. Die SCA-Eigenschaftsparameter liegen in einem zweidimensionalen Array vor, wie bereits zu Fig. 2 erläutert. In der Nutzdatenverarbeitungseinheit 5 dienen die SCA-Eigenschaftsparameter dazu, dass die Sprachdaten derart aufbereitet werden, dass diese den gemachten Einstellungen z.B. bezüglich des Funkkanals, der Verschlüsselung und/oder der Abtastrate entsprechen. Selbiges gilt auch in Empfangsrichtung oder für den Fall, dass anstatt Sprachdaten Daten zwischen Computersystemen ausgetauscht werden.

Einige dieser SCA-Eigenschaftsparameter können auch innerhalb der Nutzdatenverarbeitungseinheit 5 geändert werden. Anschließend werden diese geänderten SCA-Eigenschaftsparameter oder alle SCA-Eigenschaftsparameter, als Daten 20 bzw. als Datenpakete 20, wie in Fig. 2 gezeigt, über die Schnittstellen 43 und 35 und über die Prüfeinheiten 38 und 37 von der SCA-Ressource 39 innerhalb der Nutzdatenverarbeitungseinheit 5 an die SCA-Ressource 30 innerhalb der Steuerdatenverarbeitungseinheit 4 übertragen. Dies kann z.B. dann notwendig sein, wenn die zentrale Verarbeitungseinheit 2 erkennt, dass die empfangenen Daten mit einer höheren Abtastrate erfasst werden müssen. Die zentrale Verarbeitungseinheit 2 teilt der Nutzdatenverarbeitungseinheit 5 über die Prozess- und Datenverarbeitungseinheit 3 mit, dass eine andere Abtastrate für die Verarbeitung der empfangenen Sprachdaten zu wählen ist. Die Nutzdatenverarbeitungseinheit 5 ändert für die weiteren Berechnungen die Abtastrate und überträgt diese zu der Steuerdatenverarbeitungseinheit 4. Dabei werden bevorzugt alle SCA-Eigenschaftsparameter, die von der Nutzdatenverarbeitungseinheit 5 geändert werden können, rückübertragen. Die Steuerdatenverarbeitungseinheit 4 teilt dies wiederum dem Benutzer 10 über z.B. eine nicht dargestellte Bildschirmeinheit in der Steuereinheit 9 mit.

Die Prüfeinheiten 37, 38 haben mehrere Funktionen. Wie bereits in Fig. 2 erläutert wurde, beträgt die maximale Größe für den Variablenwert eines SCA-Eigenschaftsparameters z.B. 20 Byte. Wird aufgrund eines Fehlers in der Implementierung oder durch Kompromittierung einer SCA-Ressource ein Wert von mehr als z.B. 20 Byte einem SCA-Eigenschaftsparameter zugewiesen, so wird dies von der Prüfeinrichtung 37, 38 erkannt. Die Prüfeinrichtung 37, 38 kann entweder den Wert für den SCA-Eigenschaftsparameter auf z.B. 20 Byte begrenzen oder aber die gesamten Daten 20 bzw. Datenpakete 20 vor dem Austausch verwerfen und eine Wiederholung der Übertragung anfordern.

Eine weitere Aufgabe der Prüfeinrichtung 37, 38 besteht, wie bereits erläutert, darin, dass von den zu übertragenden Daten 20 bzw. Datenpaketen 20, eine Signatur oder eine Prüfsumme gebildet wird. Diese Signatur oder Prüfsumme wird an das Ende der zu übertragenden Daten 20 bzw. Datenpakete 20 angehängt. Empfängt z.B. die Prüfeinheit 38 Daten 20, bzw. Datenpakete 20 von der Steuerdatenverarbeitungseinheit 4, denen keine Signatur oder Prüfsummen beigefügt sind, so können die Daten 20, bzw. Datenpakete 20 durch die Prüfeinheit 38 verworfen werden. Enthalten die Daten 20 bzw. Datenpakete 20 eine Signatur oder eine Prüfsumme, so findet der Austausch der Daten 20 bzw. Datenpakete 20 nur dann statt, wenn die Prüfeinheit 38 die Daten 20 bzw. Datenpakete 20 mittels der Signatur oder der Prüfsumme validiert hat. Selbiges gilt auch für den Fall, dass die Daten 20 bzw. Datenpakete 20 in umgekehrter Richtung zu übertragen sind.

Erkennt eine der Prüfeinheiten 37, 38, dass Daten 20 bzw. Datenpakete 20 fehlerhaft übertragen wurden, so kann die zumindest eine Steuerdatenverarbeitungseinheit 4 und/oder die zumindest eine Nutzdatenverarbeitungseinheit 5 neu gestartet und/oder neu geladen werden. Dadurch kann eine eventuell kompromittierte Steuerdatenverarbeitungseinheit 4 und/oder kompromittierte Nutzdatenverarbeitungseinheit 5 erneut aus einer nicht dargestellten Speichereinheit geladen werden, wobei diese Speichereinheit einzig einen Nur-Lese-Zugriff aufweist. Für den Fall, dass die Steuerdatenverarbeitungseinheit 4 und/oder die Nutzdatenverarbeitungseinheit 5 in einem nicht definierten Zustand arbeiten, kann das Neustarten dieser Verarbeitungseinheiten 4, 5 ausreichend sein.

Sobald eine der beiden Verarbeitungseinheiten 4, 5 neu gestartet und/oder neu geladen wurde, müssen die SCA-Eigenschaftsparameter neu ausgetauscht werden. Daher findet eine Synchronisation zwischen der zumindest einen Steuerdatenverarbeitungseinheit 4 und der zumindest einen Nutzdatenverarbeitungseinheit 5 statt, sobald z.B. die Nutzdatenverarbeitungseinheit 5 neu gestartet und/oder geladen ist. Die Nutzdatenverarbeitungseinheit 5 kann der Steuerdatenverarbeitungseinheit 4 über die Schnittstellen 43, 35 mittteilen, dass sie neu gestartet und/oder geladen wurde.

Das Ziel dabei ist, dass keine Sprachdaten oder Daten, die verschiedene Computersysteme mit Hilfe des Kommunikationssystems 1 austauschen, von der Nutzdatenverarbeitungseinheit 5 zur Steuerdatenverarbeitungseinheit 4 übertragen werden und dort dem Benutzer 10 zugänglich gemacht werden können. Sendet z.B. ein Computersystem, welches an das Kommunikationssystem 1 angeschlossen ist, an ein anderes Computersystem, welches an ein weiteres Kommunikationssystem angeschlossen ist, eine Datei mit einer Größe von z.B. 2 Megabyte und gelangt diese Datei durch einen Fehler in die zu übertragenden Daten 20 bzw. in das Datenpaket 20, so sorgt die Prüfeinheit 37, 38 dafür, dass maximal nur die ersten z.B. 20 Byte von der Nutzdatenverarbeitungseinheit 5 zur Steuerdatenverarbeitungseinheit 4 übertragen werden.

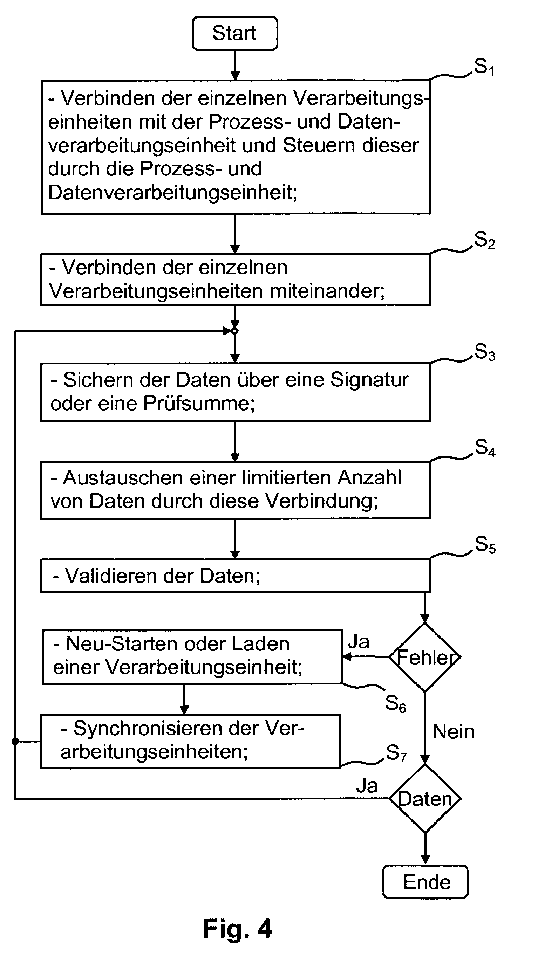

Fig. 4 zeigt ein Ablaufdiagramm, welches das erfindungsgemäße Verfahren für das Kommunikationssystem 1 beschreibt.

In einem ersten Verfahrensschritt S₁ werden nach dem Start des Kommunikationssystems 1 die zumindest eine Steuerdatenverarbeitungseinheit 4 und die zumindest eine Nutzdatenverarbeitungseinheit 5 durch die Prozess- und Datenverarbeitungseinheit 3 (Separation-Kernel-Betriebssystem) in die erste Partition 6 und in die zweite Partition 7 geladen. Die zumindest eine Steuerdatenverarbeitungseinheit 4 und die zumindest eine Nutzdatenverarbeitungseinheit 5 werden dadurch mit der Prozess- und Datenverarbeitungseinheit 3 verbunden. Die Prozess- und Datenverarbeitungseinheit 3 steuert dabei die beiden anderen Verarbeitungseinheiten 4, 5.

In einem zweiten Verfahrensschritt S₂ werden die zumindest eine Steuerdatenverarbeitungseinheit 4 und die zumindest eine Nutzdatenverarbeitungseinheit 5 miteinander durch die Verbindung 8 verbunden.

In einem dritten Verfahrensschritt S₃ werden die zu übertragendenden Daten 20 bzw. Datenpakete 20 durch eine Prüfeinheit 37, 38 mit einer Signatur oder einer Prüfsumme gesichert. Für den Fall, dass der Variablenwert für einen SCA-Eigenschaftsparameter, der in den Daten 20 bzw. Datenpaketen 20 übertragen werden soll, größer als z.B. 20 Byte ist, begrenzt die Prüfeinheit 37, 38 diesen SCA-Eigenschaftsparameter auf z.B. 20 Byte.

In einem vierten Verfahrensschritt S₄ werden die Daten 20 bzw. die Datenpakete 20 über die Verbindung 8 zwischen der Steuerdatenverarbeitungseinheit 4 und der Nutzdatenverarbeitungseinheit 5 ausgetauscht. Dabei wird allerdings nur eine limitierte Anzahl von Daten 20 bzw. Datenpaketen 20 ausgetauscht. Mehr als z.B. 20 Byte umfasst kein Variablenwert für einen SCA-Eigenschaftsparameter.

In einem fünften Verfahrensschritt S₅ werden die von der Prüfeinheit 37, 38 empfangenen Daten 20 bzw. Datenpakete 20 durch die Prüfeinheit 37, 38 anhand ihrer Signatur oder Prüfsumme validiert. Tritt in der Übertragung ein Fehler auf, so stimmt die Prüfsumme oder Signatur nicht mit den empfangenen Daten 20 bzw. Datenpaketen 20 überein. Die Daten 20 bzw. Datenpakete 20 können optional verworfen und neu angefordert werden. Tritt kein Fehler auf, so können weitere Daten 20 bzw. Datenpakete übertragen werden. Der Verfahrensschritt S₃ wird dann erneut ausgeführt.

In einem sechsten Verfahrensschritt S₆ wird die zumindest eine Steuerdatenverarbeitungseinheit 5 und/oder die zumindest eine Nutzdatenverarbeitungseinheit 5 neu gestartet und/oder neu geladen, sobald durch eine Prüfeinheit 37, 38 ein Fehler entdeckt wird.

In einem siebten Verfahrensschritt S₇ werden die Daten 20 bzw. Datenpakete 20 zwischen der zumindest einen Steuerdatenverarbeitungseinheit 4 und der zumindest einen Nutzdatenverarbeitungseinheit 5 synchronisiert, sobald die Nutzdatenverarbeitungseinheit 5 neu gestartet und/oder neu geladen wird. Anschließend können wieder wie gewohnt Daten 20 bzw. Datenpakete 20 zwischen der Steuerdatenverarbeitungseinheit 4 und der Nutzdatenverarbeitungseinheit 5 ausgetauscht werden.

Eine Prüfeinheit 37, 38 ist nicht zwingend erforderlich, so dass bevorzugt zumindest die Verfahrensschritte S₁, S₂ und S₄ ausgeführt werden, um zu dem erfindungsgemäßen Verfahren zu gelangen. Allerdings müssen in diesem Fall innerhalb der SCA-Ressourcen 33, 34, 35, 36, 41, 42, 43, 44 die zu versendenden Daten 20 bzw. Datenpakete 20 limitiert werden und zwar derart, dass es sich bei der limitierten Anzahl an Daten 20 um eine Anzahl handelt, die im fehlerfreien Betriebsablauf für gewöhnlich zu übertragen ist, wobei es sich bei den Daten 20 um Eigenschaftsparameter für das Kommunikationssystem 1 handelt.

Die Prüfeinheit 37, 38 kann auch direkt in die SCA-Ressource 30, 31, 41, 42 integriert sein. In Fig. 3 ist die Prüfeinheit 37, 38 allerdings als eigenständige Einheit ausgebildet, damit dadurch die Funktionsweise besser verdeutlicht wird.

Die Erfindung ist nicht auf das beschriebene Ausführungsbeispiel beschränkt. Die Erfindung ist im Übrigen auch für drahtgebundene Kommunikationssysteme geeignet.

## Patentansprüche

1. Kommunikationssystem (1) zur mobilen Kommunikation aufweisend eine zentrale Verarbeitungseinheit (2), eine Prozess- und Datenverarbeitungseinheit (3), zumindest eine Steuerdatenverarbeitungseinheit (4) und zumindest eine Nutzdatenverarbeitungseinheit (5),
- wobei die Prozess- und Datenverarbeitungseinheit (3) mit der zentralen Verarbeitungseinheit (2), mit der zumindest einen Steuerdatenverarbeitungseinheit (4) und mit der zumindest einen Nutzdatenverarbeitungseinheit (5) verbunden ist und diese steuert,
- wobei die Prozess- und Datenverarbeitungseinheit (3) ein Separation-Kernel-Betriebssystem ist, welches verschiedene Funktionsblöcke als eigenständige Prozessräume in verschiedenen Partitionen (6, 7) speichert,
- wobei die Anordnung der Partitionen (6, 7) zur Boot- und Laufzeit des Kommunikationssystems (1) unabänderlich ist,
- wobei die zumindest eine Steuerdatenverarbeitungseinheit (4) in einer ersten Partition (6) und die zumindest eine Nutzdatenverarbeitungseinheit (5) in einer zweiten Partition (7) getrennt voneinander untergebracht und miteinander über eine Verbindung (8) verbunden sind und über diese ein Austausch von einer limitierten Anzahl an Daten (20) stattfindet, und
- wobei eine Struktur, in welcher die Daten (20) zwischen der zumindest einen Steuerdatenverarbeitungseinheit (4) und der zumindest einen Nutzdatenverarbeitungseinheit (5) übertragen werden, bekannt ist, so dass die erlaubte Anzahl an zu übertragenden Daten (20) auf die Anzahl der im fehlerfreien Betriebsablauf für gewöhnlich zu übertragenden Daten (20) limitiert ist.

2. Kommunikationssystem nach Anspruch 1,
**dadurch gekennzeichnet,**
**dass** es sich bei dem Kommunikationssystem (1) um ein Funkgerät handelt.

3. Kommunikationssystem nach einem der Ansprüche 1 oder 2,
**dadurch gekennzeichnet,**
**dass** es sich bei den auszutauschenden Daten (20) um Eigenschaftsparameter des Kommunikationssystems (1) handelt.

4. Kommunikationssystem nach einem der vorherigen Ansprüche,
**dadurch gekennzeichnet,**
- **dass** die Daten (20) in der Steuerdatenverarbeitungseinheit (4) abgelegt sind und
- **dass** diese Daten (20) innerhalb der Nutzdatenverarbeitungseinheit (5) veränderbar sind und anschließend die veränderten Daten (20) an die Steuerdatenverarbeitungseinheit (4) übertragen werden.

5. Kommunikationssystem nach einem der vorherigen Ansprüche,
**dadurch gekennzeichnet,**
**dass** fehlerhafte Daten (20) schon vor dem Austausch verworfen werden.

6. Kommunikationssystem nach einem der vorherigen Ansprüche,
**dadurch gekennzeichnet,**
**dass** der Austausch der Daten (20) über eine Signatur oder eine Prüfsumme gesichert ist.

7. Kommunikationssystem nach Anspruch 6,
**dadurch gekennzeichnet,**
**dass** der Austausch der Daten (20) nur dann stattfindet, wenn eine Prüfeinheit (37, 38) die Daten (20) mittels der Signatur oder der Prüfsumme validiert hat.

8. Kommunikationssystem nach Anspruch 7,
**dadurch gekennzeichnet,**
**dass** die zumindest eine Steuerdatenverarbeitungseinheit (4) und die zumindest eine Nutzdatenverarbeitungseinheit (5) über je eine Prüfeinheit (37, 38) verfügen.

9. Kommunikationssystem nach einem der vorherigen Ansprüche,
**dadurch gekennzeichnet,**
**dass** die zumindest eine Steuerdatenverarbeitungseinheit (4) und/oder die zumindest eine Nutzdatenverarbeitungseinheit (5) neu zu starten und/oder neu zu laden sind, sobald zumindest eine Prüfeinheit (37, 38) einen Fehler entdeckt.

10. Kommunikationssystem nach einem der vorherigen Ansprüche,
**dadurch gekennzeichnet,**
**dass** die Daten (20) zwischen der zumindest einen Steuerdatenverarbeitungseinheit (4) und der zumindest einen Nutzdatenverarbeitungseinheit (5) synchronisiert werden, sobald die Nutzdatenverarbeitungseinheit (5) neu gestartet und/oder neu geladen ist.

11. Kommunikationssystem nach einem der vorherigen Ansprüche,
**dadurch gekennzeichnet,**
**dass** bei fehlerhafter Übertragung die eventuell kompromittierte Steuerdatenverarbeitungseinheit (4) und/oder die kompromittierte Nutzdatenverarbeitungseinheit (5) erneut aus einer Speichereinheit ladbar ist und
**dass** die Speichereinheit einzig einen Nur-Lese-Zugriff aufweist.

12. Kommunikationssystem nach einem der vorherigen Ansprüche,
**dadurch gekennzeichnet,**
**dass** die zentrale Datenverarbeitungseinheit (2) mit einer Steuereinheit (9) verbunden ist.

13. Kommunikationssystem nach Anspruch 12,
**dadurch gekennzeichnet,**
**dass** an der Steuereinheit (9) die Verschlüsselung und/oder die Abtastrate und/oder die Modulationsart und/oder die Frequenz und/oder die Bandbreite und/oder die Sendeleistung des Kommunikationssystems (1) einstellbar sind.

14. Kommunikationssystem nach einem der vorherigen Ansprüche,
**dadurch gekennzeichnet,**
**dass** die zentrale Datenverarbeitungseinheit (2) mit einer Ein- und Ausgabeeinheit (13) verbunden ist.

15. Kommunikationssystem nach Anspruch 14,
**dadurch gekennzeichnet,**
**dass** die Ein- und Ausgabeeinheit (13) einen Audio-Eingang (14) und/oder einen Audio-Ausgang (15) und/oder einen Netzwerkanschluss (16) und/oder einen USB-Anschluss (17) aufweist.

16. Kommunikationssystem nach einem der vorherigen Ansprüche,
**dadurch gekennzeichnet,**
**dass** die zentrale Datenverarbeitungseinheit (2) mit einer Sende- und Empfangseinrichtung (11) verbunden ist.

17. Kommunikationssystem nach Anspruch 16,
**dadurch gekennzeichnet,**
**dass** die Sende- und Empfangseinrichtung (11) mit einer Antenne (12) verbunden ist.

18. Verfahren für ein Kommunikationssystem (1) zur mobilen Kommunikation aufweisend eine zentrale Verarbeitungseinheit (2), eine Prozess- und Datenverarbeitungseinheit (3), zumindest eine Steuerdatenverarbeitungseinheit (4) und zumindest eine Nutzdatenverarbeitungseinheit (5):
- Verbinden (S₁) der Prozess- und Datenverarbeitungseinheit (3) mit der zentralen Verarbeitungseinheit (2), mit der zumindest einen Steuerdatenverarbeitungseinheit (4) und mit der zumindest einen Nutzdatenverarbeitungseinheit (5) und Steuern dieser durch die Prozess- und Datenverarbeitungseinheit (3), wobei die Prozess- und Datenverarbeitungseinheit (3) ein Separation-Kernel-Betriebssystem ist, welches verschiedene Funktionsblöcke als eigenständige Prozessräume in verschiedenen Partitionen (6, 7) speichert, wobei die Anordnung der Partitionen (6, 7) zur Boot- und Laufzeit des Kommunikationssystems (1) unabänderlich ist und wobei die zumindest eine Steuerdatenverarbeitungseinheit (4) in einer ersten Partition (6) und die zumindest eine Nutzdatenverarbeitungseinheit (5) in einer zweiten Partition (7) getrennt voneinander untergebracht sind;
- Verbinden (S₂) der zumindest einen Steuerdatenverarbeitungseinheit (4) und der zumindest einen Nutzdatenverarbeitungseinheit (5) miteinander durch eine Verbindung (8); Austauschen (S₄) einer limitierten Anzahl von Daten (20) durch diese Verbindung (8), wobei eine Struktur in welcher die Daten (20) zwischen der zumindest einen Steuerdatenverarbeitungseinheit (4) und der zumindest einen Nutzdatenverarbeitungseinheit (5) übertragen werden, bekannt ist, so dass die erlaubte Anzahl an zu übertragenden Daten (20) auf die Anzahl der im fehlerfreien Betriebsablauf für gewöhnlich zu übertragenden Daten (20) limitiert ist.

19. Verfahren für ein Kommunikationssystem nach Anspruch 18,
**dadurch gekennzeichnet,**
**dass** das Verfahren einen weiteren Verfahrensschritt aufweist:
- Sichern (S₃) des Austauschs der Daten (20) über eine Signatur oder eine Prüfsumme.

20. Verfahren für ein Kommunikationssystem nach Anspruch 19,
**dadurch gekennzeichnet,**
**dass** das Verfahren einen weiteren Verfahrensschritt aufweist:
- Validieren (S₅) der Daten (20) durch eine Prüfeinheit (37, 38) mittels der Signatur oder der Prüfsumme.

21. Verfahren für ein Kommunikationssystem nach einem der Ansprüche 18 bis 20,
**dadurch gekennzeichnet,**
**dass** das Verfahren einen weiteren Verfahrensschritt aufweist:
- Neu Starten und/oder neu Laden (S₆) der zumindest einen Steuerdatenverarbeitungseinheit (4) und/oder der zumindest einen Nutzdatenverarbeitungseinheit (5), sobald durch eine Prüfeinheit (37, 38) ein Fehler entdeckt wird.

22. Verfahren für ein Kommunikationssystem nach einem der Ansprüche 18 bis 21,
**dadurch gekennzeichnet,**
**dass** das Verfahren einen weiteren Verfahrensschritt aufweist:
- Synchronisieren (S₇) der Daten (20) zwischen der zumindest einen Steuerdatenverarbeitungseinheit (4) und der zumindest einen Nutzdatenverarbeitungseinheit (5), sobald die Nutzdatenverarbeitungseinheit (5) neu gestartet und/oder neu geladen wird.

23. Verfahren für ein Kommunikationssystem nach einem der Ansprüche 18 bis 22,
**dadurch gekennzeichnet,**
**dass** es sich bei dem Kommunikationssystem (1) um ein Funkgerät handelt, und/oder
**dass** es sich bei den auszutauschenden Daten (20) um Eigenschaftsparameter des Kommunikationssystems (1) handelt.

## Claims

1. Communications system (1) for mobile communications, comprising a central processing unit (2), a process and data processing unit (3), at least one control processing unit (4) and at least one payload processing unit (5),
- wherein the process and data processing unit (3) is connected to the central processing unit (2), to the at least one control processing unit (4) and to the at least one payload processing unit (5), and controls said units,
- wherein the process and data processing unit (3) is a separation kernel operating system, which stores different function blocks as autonomous process spaces in different partitions (6, 7),
- wherein the arrangement of the partitions (6, 7) cannot be modified during boot-up and at runtime of the communications system (1),
- wherein the at least one control processing unit (4) in a first partition (6) and the at least one payload processing unit (5) in a second partition (7) are located separately from one another and are connected to one another via a connection (8), over which a limited amount of data (20) is transferred, and
- wherein a structure, in which the data (20) is transmitted between the at least one control processing unit (4) and the at least one payload processing unit (5), is known, and therefore the permitted amount of data (20) to be transmitted is limited to the amount of data (20) normally to be transmitted during error-free operation.

2. Communications system according to claim 1,
**characterized in that**
the communications system (1) is a radio apparatus.

3. Communications system according to either claim 1 or claim 2,
**characterized in that**
properties of the communications system (1) constitute the data (20) to be transferred.

4. Communications system according to any of the preceding claims,
**characterized in that**
- the data (20) is stored in the control processing unit (4), and
- this data (20) can be modified inside the payload processing unit (5) and then the modified data (20) is transmitted to the control processing unit (4).

5. Communications system according to any of the preceding claims,
**characterized in that**
corrupted data (20) is already discarded before transfer.

6. Communications system according to any of the preceding claims,
**characterized in that**
the transfer of the data (20) is protected by means of a signature or a checksum.

7. Communications system according to claim 6,
**characterized in that**
the data (20) is only transferred once a validation unit (37, 38) has validated the data (20) by means of the signature or the checksum.

8. Communications system according to claim 7,
**characterized in that**
the at least one control processing unit (4) and the at least one payload processing unit (5) each have a validation unit (37, 38).

9. Communications system according to any of the preceding claims,
**characterized in that**
the at least one control processing unit (4) and/or the at least one payload processing unit (5) must be restarted and/or reloaded as soon as at least one validation unit (37, 38) detects an error.

10. Communications system according to any of the preceding claims,
**characterized in that**
the data (20) is synchronized between the at least one control processing unit (4) and the at least one payload processing unit (5) as soon as the payload processing unit (5) is restarted and/or reloaded.

11. Communications system according to any of the preceding claims,
**characterized in that**
in the event of incorrect transmission, the possibly compromised control processing unit (4) and/or the compromised payload processing unit (5) can be reloaded from a memory unit, and **in that** the memory unit has solely read-only access.

12. Communications system according to any of the preceding claims,
**characterized in that**
the central data processing unit (2) is connected to a control unit (9).

13. Communications system according to claim 12,
**characterized in that**
the encryption and/or the sampling rate and/or the modulation type and/or the frequency and/or the bandwidth and/or the transmit power of the communications system (1) can be set at the control unit (9).

14. Communications system according to any of the preceding claims,
**characterized in that**
the central data processing unit (2) is connected to an input/output unit (13).

15. Communications system according to claim 14,
**characterized in that**
the input/output unit (13) comprises an audio input (14) and/or an audio output (15) and/or a network port (16) and/or a USB port (17).

16. Communications system according to any of the preceding claims,
**characterized in that**
the central data processing unit (2) is connected to a transceiver (11).

17. Communications system according to claim 16,
**characterized in that**
the transceiver (11) is connected to an antenna (12).

18. Method for a communications system (1) for mobile communications comprising a central processing unit (2), a process and data processing unit (3), at least one control processing unit (4) and at least one payload processing unit (5):
- connecting (S₁) the process and data processing unit (3) to the central processing unit (2), to the at least one control processing unit (4) and to the at least one payload processing unit (5), and the process and data processing unit (3) controlling said units, wherein the process and data processing unit (3) is a separation kernel operating system, which stores different function blocks as autonomous process spaces in different partitions (6, 7), wherein the arrangement of the partitions (6, 7) cannot be modified during boot-up and at runtime of the communications system (1), and wherein the at least one control processing unit (4) in a first partition (6) and the at least one payload processing unit (5) in a second partition (7) are located separately from one another;
- connecting (S₂) the at least one control processing unit (4) and the at least one payload processing unit (5) to one another via a connection (8);
- transferring (S₄) a limited amount of data (20) through this connection (8), wherein a structure, in which the data (20) is transmitted between the at least one control processing unit (4) and the at least one payload processing unit (5), is known, and therefore the permitted amount of data (20) to be transmitted is limited to the amount of data (20) normally to be transmitted during error-free operation.

19. Method for a communications system according to claim 18,
**characterized in that**
the method comprises a further method step:
- protecting (S₃) by means of a signature or a checksum the transfer of the data (20).

20. Method for a communications system according to claim 19,
**characterized in that**
the method comprises a further method step:
- a validation unit (37, 38) validating (S₅) the data (20) by means of the signature or the checksum.

21. Method for a communications system according to any of claims 18 to 20,
**characterized in that**
the method comprises a further method step:
- restarting and/or reloading (S₆) the at least one control processing unit (4) and/or the at least one payload processing unit (5) as soon as a validation unit (37, 38) detects an error.

22. Method for a communications system according to any of claims 18 to 21,
**characterized in that**
the method comprises a further method step:
- synchronizing (S₇) the data (20) between the at least one control processing unit (4) and the at least one payload processing unit (5) as soon as the payload processing unit (5) is restarted and/or reloaded.

23. Method for a communications system according to any of claims 18 to 22,
**characterized in that**
the communications system (1) is a radio apparatus, and/or
**in that** properties of the communications system (1) constitute the data (20) to be transferred.

## Revendications

1. Système de communication (1) pour une communication mobile comportant une unité centrale (2), une unité de traitement de processus et de données (3), au moins une unité de traitement de données de commande (4) et au moins une unité de traitement de données utiles (5),
- dans lequel l'unité de traitement de processus et de données (3) est reliée à l'unité centrale (2), à la au moins une unité de traitement de données de commande (4) et à la au moins une unité de traitement de données utiles (5), et commande celles-ci,
- dans lequel l'unité de traitement de processus et de données (3) est un système d'exploitation à séparation de noyau, qui mémorise différents blocs de fonction en tant qu'espaces de processus autonomes dans différentes partitions (6, 7),
- dans lequel l'agencement des partitions (6, 7) est irrévocable par rapport au démarrage et à la durée du système de communication (1),
- dans lequel la au moins une unité de traitement de données de commande (4) dans une première partition (6) et la au moins une unité de traitement de données utiles (5) dans une seconde partition (7) sont installées séparées l'une de l'autre et reliées l'une à l'autre par l'intermédiaire d'une liaison (8) et un échange d'un nombre limité de données (20) est effectué par l'intermédiaire de celles-ci, et
- dans lequel une structure, dans laquelle les données (20) entre la au moins une unité de traitement de données de commande (4) et la au moins une unité de traitement de données utiles (5) sont transmises, est connue de sorte que le nombre autorisé de données à transmettre (20) est limité au nombre de données (20) à transmettre habituellement pendant un processus de fonctionnement correct.

2. Système de communication selon la revendication 1, **caractérisé en ce**
**qu'**il s'agit dans le cas du système de communication (1) d'un appareil radio.

3. Système de communication selon l'une des revendications 1 ou 2, **caractérisé en ce**
**qu'**il s'agit dans le cas de données à échanger (20) de paramètres de propriétés du système de communication (1).

4. Système de communication selon l'une des revendications précédentes, **caractérisé en ce que**
- les données (20) sont mémorisées dans l'unité de traitement de données de commande (4) et
- **en ce que** ces données (20) sont modifiables à l'intérieur de l'unité de traitement de données utiles (5) et enfin les données modifiées (20) sont transmises à l'unité de traitement de données de commande (4).

5. Système de communication selon l'une des revendications précédentes, **caractérisé en ce que**
des données défectueuses (20) sont déjà rejetées avant l'échange.

6. Système de communication selon l'une des revendications précédentes, **caractérisé en ce que**
l'échange des données (20) est protégé par une signature ou une somme de contrôle.

7. Système de communication selon la revendication 6, **caractérisé en ce que**
l'échange de données (20) n'a lieu que lorsqu'une unité de contrôle (37, 38) a validé les données (20) au moyen de la signature ou de la somme de contrôle.

8. Système de communication selon la revendication 7, **caractérisé en ce que**
la au moins une unité de traitement de données de commande (4) et la au moins une unité de traitement de données utiles (5) disposent chacune d'une unité de contrôle (37, 38) .

9. Système de communication selon l'une des revendications précédentes, **caractérisé en ce que**
la au moins une unité de traitement de données de commande (4) et/ou la au moins une unité de traitement de données utiles (5) doivent être démarrées de nouveau et/ou chargées de nouveau, dès qu'une unité de contrôle (37, 38) découvre une erreur.

10. Système de communication selon l'une des revendications précédentes, **caractérisé en ce que**
les données (20) sont synchronisées entre la au moins une unité de traitement de données de commande (4) et la au moins une unité de traitement de données utiles (5), dès que l'unité de traitement de données utiles (5) est de nouveau démarrée et/ou de nouveau chargée.

11. Système de communication selon l'une des revendications précédentes, **caractérisé en ce que**
dans le cas d'une transmission défectueuse, l'unité de traitement de données de commande (4) éventuellement compromise et/ou l'unité de traitement de données utiles compromise (5) peut être chargée de nouveau à partir d'une unité de stockage et
**en ce que** l'unité de stockage comporte seulement un accès en lecture seule.

12. Système de communication selon l'une des revendications précédentes, **caractérisé en ce que**
l'unité centrale (2) est reliée à une unité de commande (9).

13. Système de communication selon la revendication 12, **caractérisé en ce que**
le cryptage et/ou le taux d'échantillonnage et/ou le type de modulation et/ou la fréquence et/ou la largeur de bande et/ou la puissance d'émission du système de communication (1) peuvent être réglés dans l'unité de commande (9).

14. Système de communication selon l'une des revendications précédentes, **caractérisé en ce que**
l'unité centrale (2) est reliée à une unité d'entrée et de sortie (13).

15. Système de communication selon la revendication 14, **caractérisé en ce que**
l'unité d'entrée et de sortie (13) comporte une entrée audio (14) et/ou une sortie audio (15) et/ou un port réseau (16) et/ou un port USB (17).

16. Système de communication selon l'une des revendications précédentes, **caractérisé en ce que**
l'unité centrale (2) est reliée à un dispositif d'émission et de réception (11).

17. Système de communication selon la revendication 16, **caractérisé en ce que**
le dispositif d'émission et de réception (11) est relié à une antenne (12).

18. Procédé pour un système de communication (1) en vue d'une communication mobile comportant une unité centrale (2), une unité de traitement de processus et de données (3), au moins une unité de traitement de données de commande (4) et au moins une unité de traitement de données utiles (5) :
- la liaison (S₁) de l'unité de traitement de processus et de données (3) à l'unité centrale (2), à la au moins une unité de traitement de données de commande (4) et à la au moins une unité de traitement de données utiles (5) et la commande de celles-ci par l'unité de traitement de processus et de données (3), où l'unité de traitement de processus et de données (3) est un système d'exploitation à séparation de noyau, qui mémorise différents blocs de fonction en tant qu'espaces de processus autonomes dans différentes partitions (6, 7), dans laquelle l'agencement des partitions (6, 7) est irrévocable par rapport au démarrage et à la durée du système de communication (1) et dans laquelle la au moins une unité de traitement de données de commande (4) dans une première partition (6) et la au moins une unité de traitement de données utiles (5) dans une seconde partition (7) sont intégrées séparées l'une de l'autre ;
- une liaison (S₂) de la au moins une unité de traitement de données de commande (4) et de la au moins une unité de traitement de données utiles (5) l'une avec l'autre par une liaison (8) ;
l'échange (S₄) d'un nombre limité de données (20) par cette liaison (8), où une structure, dans laquelle les données (20) sont transmises entre la au moins une unité de traitement de données de commande (4) et la au moins une unité de traitement de données utiles (5), est connue, de sorte que le nombre autorisé de données à transmettre (20) est limité au nombre de données (20) à transmettre habituellement dans le processus de fonctionnement correct.

19. Procédé pour un système de communication selon la revendication 18, **caractérisé en ce que**
le procédé comporte une autre étape de procédé :
- la protection (S₃) de l'échange de données (20) par l'intermédiaire d'une signature ou d'une somme de contrôle.

20. Procédé pour un système de communication selon la revendication 19, **caractérisé en ce que**
le procédé comporte une autre étape de procédé :
- la validation (S₅) des données (20) par une unité de contrôle (37, 38) au moyen de la signature ou de la somme de contrôle.

21. Procédé pour un système de communication selon l'une des revendications 18 à 20, **caractérisé en ce que**
le procédé comporte une autre étape de procédé :
- un nouveau démarrage et/ou une nouvelle charge (S₆) de la au moins une unité de traitement de données de commande (4) et/ou de la au moins une unité de traitement de données utiles (5), dès qu'une erreur est découverte par une unité de contrôle (37, 38).

22. Procédé pour un système de communication selon l'une des revendications 18 à 21, **caractérisé en ce que**
le procédé comporte une autre étape de procédé :
- la synchronisation (S₇) des données (20) entre la au moins une unité de traitement de données de commande-(4) et la au moins une unité de traitement de données utiles (5), dès que l'unité de traitement de données utiles (5) est de nouveau démarrée et/ou de nouveau chargée.

23. Procédé pour un système de communication selon l'une des revendications 18 à 22, **caractérisé en ce que**
dans le cas du système de communication (1), il s'agit d'un appareil radio, et/ou
**en ce que**, dans le cas de l'échange de données (20), il s'agit de paramètres de propriétés du système de communication (1).
